# EUROPEAN PATENT APPLICATION

(11) **EP 4 607 731 A1**
(43) Date of publication of application: **27.08.2025**
(21) Application number: 24158587.6
(22) Date of filing: 20.02.2024
(51) Int. Cl.: H02J 3/00, H02J 3/14, C25B 1/04

(54) **METHOD FOR OPERATING AN ELECTROLYSIS PLANT AND ELECTROLYSIS PLANT**

(71) Applicant: thyssenkrupp nucera AG & Co. KGaA, 44269 Dortmund (DE)
(72) Inventor: Wagner, Dietmar, 58706 Menden (DE); Eßmann, Lenn, 44149 Dortmund (DE); Brandes, David, 44143 Dortmund (DE); Donnermeyer, Stefan, 45145 Essen (DE)
(74) Representative: thyssenkrupp Intellectual Property GmbH

(57) **Abstract**

The invention relates to an electrolysis plant and a method of operating an electrolysis plant, the electrolysis plant comprising a plurality of electrolysis modules (2) and a plant control unit (3) to control individual operating states of the electrolysis modules (2), wherein each electrolysis module (2) comprises a plurality of electrolysis cells (4) that are connected electrically in series and arranged in parallel in a liquid electrolyte circuit (5), wherein the individual operating state of each electrolysis module (2) is chosen from a defined set of permissible operating states, which set comprises at least a reserve state, an intermediate state and a production state, wherein the plant control unit (3) based on a forecast of a future supply of electric energy to the electrolysis plant takes a decision which electrolysis modules (2) are to be transferred from the reserve state to the intermediate state or from the intermediate state to the reserve state.

## Description

### Background of the Invention

The invention relates to a method for operating an electrolysis plant according to the preamble of claim 1 and an electrolysis plant according to the preamble of claim 9.

Large scale electrolysis plants typically have a modular setup, wherein the plant comprises a number of electrolysis modules, each comprising a stack of individual electrolysis cells, which modules are supplied by an equal number of power providing units that are connected to the power grid. By controlling the module load set points of all modules the total energy demand and/or product output of the plant can be controlled.

US 4,363,101 A describes a computerized power demand control in an electrochemical plant. In order to provide regulation of the electrolytic production processes within the cells and at the same time meet the power demand constraints, energy is supplied to each electrolytic cell line through an individual tapping transformer controlled by a computer. The tapped output of the transformer is fed in a corresponding converter generating direct current for the respective electrolytic cell line. Each cell line has an individual power meter and an individual ampere meter feeding back information to the computer. Current is controlled by tap regulation under command of the computer in order to achieve toward the end of each demand period, an ideal rate of consumption, whereby the overall plant totalizes energy consumed in such amount to meet the assigned target.

In the traditional setup of electrochemical plants, as e.g. in the chlor-alkali industry, fluctuations in the electrical power supply have not been a point of concern. Electrolysis plants have typically been operated 24/7 with an almost constant power demand. Only in case the market demand for the electrolysis products and thus their market value changed significantly or a given amount of products was to be met at a specific point in time, it was an option to adapt the production capacity of the plant in the above-described manner.

With the rise of renewable energies becoming the main source of electrical power, power supply and electricity prices will be subject to larger fluctuations than before. Moreover, electrolysis plants for the electrolysis of water used to produce so-called green hydrogen will become much larger in nominal capacity than conventional chlor-alkali plants have been. Such water electrolysis plants will have a nominal power in the range of hundred(s) of megawatts or even in the gigawatt range.

In most cases, large-scale plants of this kind will not be operated at their nominal power 24/7, because the required electric power either will not be available, or will only be available at a very high price, that may render the electrolysis process uneconomic at these times. On the other hand, there will be periods of abundant supply of renewable energies provided at a very low price. Large electrolysis plants are expected to play a major role in electrochemically storing this energy, preferably in the form of green hydrogen obtained by water electrolysis, thereby stabilizing the grid and the electricity prices and the same time.

In order to meet this goal, electrolysis plants will need to be operated with a high degree of flexibility. Although electrolysis modules can be operated in a partial load state, there is typically a minimum partial load of about 10 to 20 % of the nominal load of the module. For a further flexibility of the plant even below this threshold value of power intake, the modules will at least in part need to be switched off into a non-producing state. This can - in principle - be done simply by reducing the cell voltage of the electrolysis cell below the threshold value needed for the electrochemical reaction to take place.

As is typical for many chemical plants, an enhanced flexibility in operational load comes at the cost of increased load cycles for the components of the plant that often have a negative effect on ageing and therefore performance and efficiency. On the other hand, plants that are intended to be operated flexibly in partial load operation regarding their break-even point are more sensitive to investment costs and operational costs as compared to plants designed for 24/7 operation at nominal load.

### Summary of Invention

It is therefore the object of the present invention, to provide a method for operating an electrolysis plant and an electrolysis plant showing an enhanced flexibility in partial load operation, while allowing for a long lifetime and reduced operating costs of the plant at the same time.

This object is achieved by the method with the features of claim 1.

Hereby, a method of operating an electrolysis plant is provided. The electrolysis plant comprises a plurality of electrolysis modules and a plant control unit to control individual operating states of the electrolysis modules. Each electrolysis module comprises a plurality of electrolysis cells that are connected electrically in series and arranged in parallel in a liquid electrolyte circuit comprising an electrolyte tank. Each electrolysis module further comprises means for feeding the electrolysis cells with liquid electrolyte from the electrolyte tank, means for draining the liquid electrolyte from the electrolysis cells to the electrolyte tank, and means for applying an electric voltage to the electrolysis cells connected in series.

According to the invention, the individual operating state of each electrolysis module is chosen from a defined set of permissible operating states, which set comprises at least a production state, an intermediate state and a reserve state. In the production state the electrolysis cells of the respective electrolysis module are filled with a liquid electrolyte and electrolysis products exported to battery limits. In the intermediate state the electrolysis cells of the respective electrolysis module are filled with the liquid electrolyte without electrolysis products being exported to battery limits, and in the reserve state the electrolysis cells of the respective electrolysis module are drained from liquid electrolyte.

Further, the plant control unit based on a forecast of a future supply of electric energy to the electrolysis plant takes a first decision which electrolysis modules are to be transferred from the reserve state to the intermediate state or from the intermediate state to the reserve state, and automatically controls the means for feeding and/or the means for draining the electrolysis cells of the respective electrolysis modules to transfer the respective electrolysis modules to the respective target state.

It has been found that the above defined intermediate state of electrolysis cells is particularly important for achieving the goal of both a flexible operation and a long lifetime of electrolysis modules. On the one hand, draining the electrolysis cells from liquid electrolyte and feeding them again takes quite some time, which may be hindering the electrolysis plant to quickly adapt to changes in the supply of electric power. On the other hand, keeping electrolysis modules in the intermediate state over long periods of time may have adverse effects on the longevity of the modules as unwanted chemical side reactions may take place between the liquid, alkaline electrolyte and the internal components of the cell.

According to the invention, this tradeoff is solved by an automatic plant control based on a forecast of a future supply of electric energy. The forecast allows for a predictive plant control. The predictive plant control ensures that a sufficient number of electrolysis modules is in the intermediate state at the point in time when supply of electric energy increases. Thus, the plant can put those electrolysis modules in production state very quickly and is therefore able to react very flexibly and without delay to an increased supply of electric energy.

On the other hand, the predictive plant control may turn electrolysis modules from the intermediate state to the reserve state when it is foreseen that they will not be needed in production state within a predetermined period of time. Thereby the internal components of the cell are protected against the adverse effects of being immersed in liquid electrolyte, while the cell is not in production state.

Further, the plant control is performed in an automatized manner, which allows for a precise tracking of the energy forecast and a corresponding timely change of state of the electrolysis modules at reduced operating costs of the plant.

In some embodiments of the method, the intermediate state is subdivided into at least four distinct stages that are defined by progressively accumulating the following features:
stage 1: electrolysis cells being filled with liquid electrolyte,
stage 2: in addition, the liquid electrolyte being circulated in the liquid electrolyte circuit through the electrolysis cells,
stage 3: in addition, a polarization voltage being applied to the electrolysis cells and stage 4: in addition, a production voltage being applied to the electrolysis cells while venting valves being open.

In these embodiments, the plant control unit takes a second decision for each electrolysis module in the intermediate state, which one of the stages is to be adopted as a function of the time scale of an expected change in the future supply of electric energy.

This has the advantage that the plant can be operated with an even less amount of resources, without its ability to flexibly react on fluctuations of energy supply being impeded. While stage 1 is characterized as a low-energy stand-by, for stages 2 to 4 less and less time is needed to switch the respective module into production state. Thus, as the time scale of a forecasted increase in the future supply of electric energy gets lesser, in preparation to this increase the electrolysis module may be moved from stage 1 to the subsequent stages until it reaches stage 4. In the reverse case, when electrolysis modules were just switched from production state to the intermediate state, the time scale of expected changes in the future supply of electric energy will be considered to decide, whether it is advantageous to bring down the electrolysis module e.g. to stage 1, or to keep it in one of the higher stages as a particularly quickly available module for a shortly expected increase of energy supply.

In further embodiments of the method, the plant control unit based on a present supply of electric energy to the electrolysis plant takes a third decision which electrolysis modules are to be transferred from the intermediate state to the production state or from the production state to the intermediate state, and automatically performs a predefined sequence of controls to transfer the respective electrolysis modules to the respective state. This has the advantage that also the production of the plant is automatically adapted to the present supply of electric energy. Thus, a completely automatic control of plant operation is achieved.

In preferred embodiments of the method, the electrolysis plant is supplied with renewable energy from a wind farm and/or solar power plant and/or water power plant. The control unit forecasts the future supply of electric energy to the electrolysis plant using an artificial intelligence system that has been trained based on historical weather data. The weather data may include wind speeds and/or solar irradiation and/or amounts of precipitation, for the sites of the wind farm or solar power plant or water power plant, respectively. This way of forecasting the future energy supply comes with a particularly high reliability, because the forecast relies on weather data for the particular renewable energy production sites that feed the electrolysis plant. Moreover, artificial intelligence systems are particularly well suited to recognize patterns in time series data and therefore to make reliable predictions.

In further preferred embodiments of the method, the artificial intelligence system is continuously trained by present weather data and data on present supply of electric energy collected during operation of the electrolysis plant. Thus, the artificial intelligence system is able to test continuously its own predictions by present data to optimize itself for the specific plant it is used for.

In some embodiments, the first, second and/or third decision which electrolysis modules are to be transferred to another operating state may be taken under the constraint that electrolysis modules having been in the intermediate state for a predetermined threshold period of time are to be transferred either to the production state or the reserve state. A threshold periods of time may be used to ensure that longer period of time, in which the electrolysis module are exposed to electrolyte in a non-production state are prevented in order to improve lifetime of the electrolysis cells before refurbishment.

In further embodiments of the method, the plant control unit chooses for each electrolysis module in the production state a load set point between 5 % and 110 % of a nominal production capacity of the electrolysis module and controls the means for applying an electric voltage such that the load set point is approached. Thereby, the plant control unit also takes over the function of load balancing between the electrolysis modules in production state. There are different possible load balancing schemes that may focus on different aspects, e.g. maximum efficiency, predictive maintenance, uniform power distribution etc.

In preferred embodiments of the method, the control sequences for automated state transfer carried out by the control unit are secured by automated trip conditions and interlocks implemented in the control unit to safeguard the automated state transfers by providing safe fallback states. The automated trip conditions and interlocks improve the safety of automated plant operation. If the requested operation state of the electrolysis module cannot be achieved, there is always a safe fallback state defined, to which the electrolysis module will be returned in this case. Trip conditions and interlocks help to reduce manual supervision efforts by plant operators and therefore reduce operating costs even further. Even a fully autonomous plant operation is imaginable, if sufficient safety measures are taken.

The object is further achieved by an electrolysis plant comprising a plurality of electrolysis modules and a plant control unit to control the individual operating states of the electrolysis modules. Each electrolysis module comprises a plurality of electrolysis cells that are connected electrically in series and arranged in parallel in a liquid electrolyte circuit comprising an electrolyte tank. The electrolysis modules further comprise means for feeding the electrolysis cells with liquid electrolyte from the electrolyte tank, means for draining the liquid electrolyte from the electrolysis cells to the electrolyte tank, and means for applying an electric voltage to the electrolysis cells connected in series. The individual operating states of each electrolysis module is to be chosen from a set of permissible operating states, which set comprises at least a production state, an intermediate state and a reserve state. In the production state the electrolysis cells of the respective electrolysis module are filled with a liquid electrolyte and electrolysis products are exported to battery limits. In the intermediate state the electrolysis cells of the respective electrolysis module are filled with the liquid electrolyte without electrolysis products being exported to battery limits, and in the reserve state the electrolysis cells of the respective electrolysis module are drained from liquid electrolyte.

The plant control unit is configured to take a first decision, which electrolysis modules are to be transferred from the reserve state to the intermediate state or from the intermediate state to the reserve state based on a forecast of a future supply of electric energy to the electrolysis plant. The plant control unit is further configured to automatically control the means for feeding and/or the means for draining the electrolysis cells of the respective electrolysis module to transfer the respective electrolysis modules to the respective target state.

In some embodiments, the plant control unit is configured to take a third decision, which electrolysis modules are to be transferred from the intermediate state to the production state or from the production state to the intermediate state based on a present supply of electric energy to the electrolysis plant, and to automatically perform a predefined sequence of controls to transfer the respective electrolysis modules to the respective state.

In preferred embodiments, the plant control unit comprises an artificial intelligence system for forecasting the future supply of electric energy.

In further embodiments, the control unit comprises an input channel for present weather data collected during operation of the electrolysis plant and is configured to train the artificial intelligence system continuously based on the present weather data and data on the present supply of electric energy.

In some embodiments, the control unit may comprise a timer to measure the period of time of each electrolysis module being in the intermediate state, wherein the control unit is configured to take the first, second and/or third decision under the constraint that electrolysis modules having been in the intermediate state for a predetermined threshold period of time are to be transferred either to the production state or the reserve state.

In some embodiments, the plant control unit is configured to choose for each electrolysis module in the production state a load set point between 5 % and 110 % of a nominal production capacity of the electrolysis module and to control the means for applying an electric voltage such that the load set point is approached.

Further advantages of the present disclosure are described in the following with regard to the embodiments shown in the attached drawings.

### Brief Description of Drawings

- Fig. 1: shows schematically an embodiment of an electrolysis plant according to this disclosure,
- Fig. 2: shows schematically a more detailed view of one of the electrolysis modules of the electrolysis plant according to Fig. 1,
- Fig. 3: shows schematically a flow chart of the permissible operating states of the electrolysis modules, as well as the sequences to be carried out for a state transfer, and
- Fig. 4: shows schematically a diagram of a forecast of a future supply of electric energy to an electrolysis plant.

### Detailed Description of Invention

In the drawings same parts are consistently identified by the same reference signs and are therefore generally described and referred to only once.

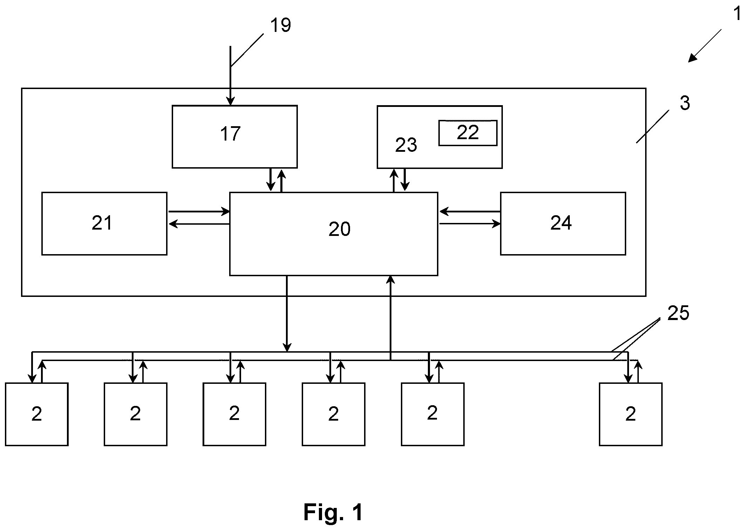

**Fig. 1** shows the schematic setup of an electrolysis plant. The electrolysis plant 1 comprises a plurality of electrolysis modules 2 and a plant control unit 3 to control the individual operating states of the electrolysis modules 2. To this end, the plant control unit 3 is connected to the electrolysis modules 2 by means of control lines 25 that preferably allow for a bidirectional communication between modules 2 and control unit 3.

Fig. 1 further shows schematically an exemplary internal structure of the plant control unit 3. The plant control unit 3 may have a modular structure and may comprise a central processing module 20 that is at least in communication with an artificial intelligence system 17. Further functional modules 21, 23 and 24 may optionally be in communication with the central processing module 20. It is to be noted that the modules of the plant control unit 3 do not need to be separate physical entities. The modules may also be incorporated as parts of a computer program running within the plant control unit 3 to perform the specific functionality. It is further to be noted that the plant control unit 3 may be a distributed computing device having parts communicating via the internet with each other. In particular, the artificial intelligence system 17 may be provided by cloud computing.

The artificial intelligence system 17 of the plant control unit 3 is preferably used to forecast the future supply of electric energy 13 to the electrolysis plant 1. To this end, the artificial intelligence system 17 preferably has been trained based on historical weather data, including wind speeds and/or solar irradiation and/or amounts of precipitation. Most preferably the historical weather data is specific for the sites of wind farms or solar power plants or water power plants, respectively, from which the electrolysis plant 1 is supplied with renewable electric energy.

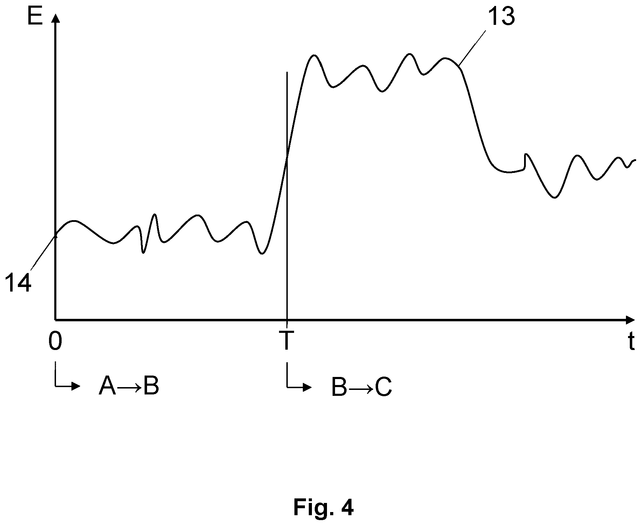

The control unit 3 may also comprise an input channel 19 for present weather data collected during operation of the electrolysis plant. From the present weather data the artificial intelligence system 17 is configured to predict the future energy supply e.g. by time series analysis. Further the control unit 3 may preferably be configured to train the artificial intelligence system 17 continuously based on the present weather data and data on the present supply of electric energy 14 (cf. Fig. 4).

The artificial intelligence system 17 may comprise e.g. a neural network, a Bayesian network, a hidden Markov model or a support vector machine.

The plant control unit 3 may further comprise a predictive maintenance module 23. The predictive maintenance module 23 may provide constraints to the central processing module 20 for controlling the electrolysis modules 2 that relate to the maintenance schedule of the electrolysis modules 2. In particular, there may be a threshold limiting the period of time that an electrolysis module 2 may be filled with liquid electrolyte without being in a production state. The predictive maintenance module 23 of the control unit 3 may therefore comprise a timer 22 to measure the period of time of each electrolysis module 2 being in such an intermediate state. The predictive maintenance module 23 may provide the constraint to the central processing module 20 that electrolysis modules 2 having been in the intermediate state for a predetermined threshold period of time T1 are to be transferred either to a production state or a reserve state in which they are drained from liquid electrolyte.

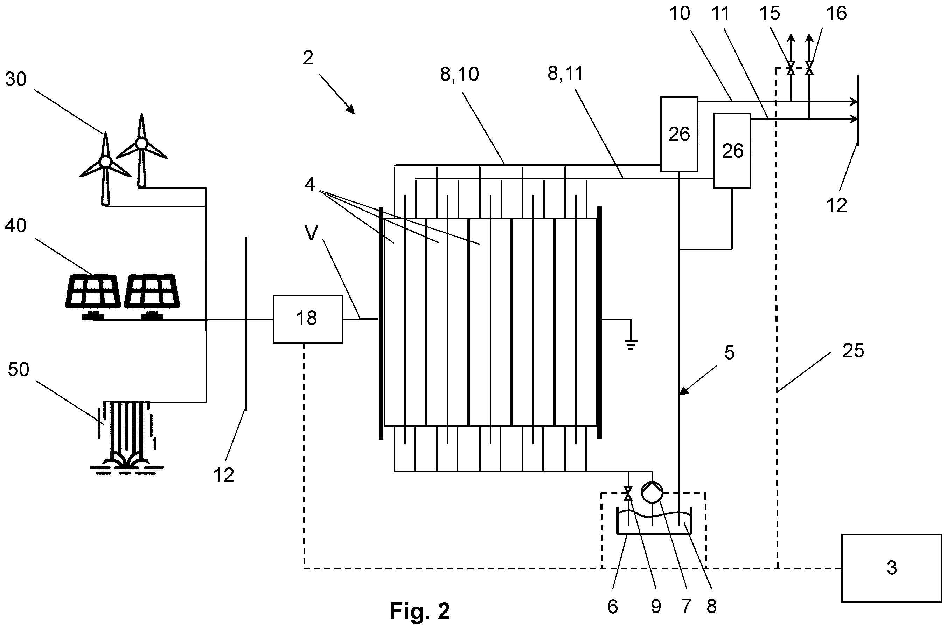

The plant control unit 3 may also comprise a load set point module 21. The load setpoint module 21 of the plant control unit 3 may be configured to choose for each electrolysis module 2 in the production state a load set point between 5 % and 110 % of a nominal production capacity of the electrolysis module. The load setpoint module 21 is thus provided to supervise the load balancing between the electrolysis modules 2 of the plant 1. Based on the load setpoint determined by the load setpoint module 21, the central processing unit 20 of the plant control unit 3 may be configured to control the means for applying 18 an electric voltage V (cf. Fig. 2) such that the load set point is approached.

Finally, the plant control unit 3 may comprise a plant balancing module 24. The plant balancing module 24 is configured to balance the plant's offsites and utilities in accordance with the current state of the electrolysis modules 2. As an example, in case of alkaline water electrolysis, water supply and purification needs to be controlled in accordance with the current state of the electrolysis modules 2.

Details concerning the internal structure of the electrolysis modules are shown in Fig. 2.

As depicted in Fig. 2 each electrolysis module 2 comprises a plurality of electrolysis cells 4 that are connected electrically in series and arranged in parallel in a liquid electrolyte circuit 5 comprising an electrolyte tank 6. The circuit 6 further comprises means for feeding 7 the electrolysis cells 4 with liquid electrolyte 8 from the electrolyte tank 6 and means for draining 9 the liquid electrolyte 8 from the electrolysis cells 4 to the electrolyte tank 6.

The means for feeding 7 the electrolysis cells 4 may preferably be a pump supplying the cells 4 with electrolyte 8. The means for draining 9 the liquid electrolyte 8 from the electrolysis cells 4 may for example be a controllable valve. The controllable valve may be opened upon request by the control unit 3 via control line 25, thereby draining the electrolyte 8 form the cells 4 to tank 6.

As depicted in Fig. 2, the electrolysis cells 4 are divided in half-cells by separators. The half-cells each contain a cathode or an anode (not shown), respectively. The anode of one cell is connected electrically in series with the cathode of the neighboring cell preferably via the back walls of the cells 4 or via bipolar plates. In case of alkaline water electrolysis, both half-cells may be fed from the same tank 6.

From the top of the electrolysis cells 4 the liquid electrolyte 8 and the respective electrolysis products 10, 11 are discharged separately to gas liquid separators 26, which separate the electrolysis products 10, 11 from the liquid electrolyte. The gaseous electrolysis products 10, 11 may be exported to battery limits 12 in a production state, or may be vented e.g. via venting valves 15, 16 controlled by the plant control unit 3. From the gas liquid separators 26 the liquid electrolyte 8 is returned to tank 6.

Alternatively, or in particular in case of electrolysis reactions requiring different electrolyte solutions in both half cells, the liquid electrolyte circuit may comprise two separate electrolyte loops with separate tanks and feed and return conduits (not shown).

Each electrolysis module 2 further comprises means for applying 18 an electric voltage V to the electrolysis cells 4 connected in series. The means for applying 18 an electric voltage V typically comprises a transformer and a rectifier. The means for applying 18 an electric voltage V receives electrical power from the grid. The connection to the grid typically is the battery limit 12 of the electrolysis plant 1 on the supply side.

As depicted in Fig. 2, the electrolysis plant may preferably be supplied via the grid with renewable energy from a wind farm 30 and/or a solar power plant 40 and/or a water power plant 50.

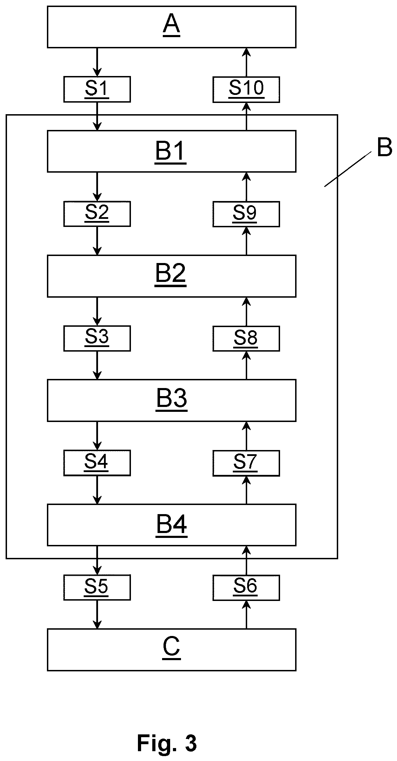

**Fig. 3** schematically depicts the permissible operating states of the electrolysis modules 2, as well as the control sequences S1 to S10 to be carried out for a state transfer in a flow chart.

During operation of the electrolysis plant 1 the individual operating state of each electrolysis module 2 is chosen from a set of permissible operating states X, which set X comprises at least
a production state C, in which the electrolysis cells 4 of the respective electrolysis module 2 are filled with a liquid electrolyte 8 and electrolysis products 10, 11 are exported to battery limits 12,
an intermediate state B, in which the electrolysis cells 4 of the respective electrolysis module 2 are filled with the liquid electrolyte 8 without electrolysis products 10, 11 being exported to battery limits 12, and
a reserve state A, in which the electrolysis cells 4 of the respective electrolysis module 2 are drained from liquid electrolyte 8.

The plant control unit 3 is configured to take a first decision which electrolysis modules 2 are to be transferred from the reserve state A to the intermediate state B or from the intermediate state B to the reserve state A. This first decision is to be based on a forecast of a future supply of electric energy 13 (cf. Fig. 4) to the electrolysis plant 1. The plant control unit 1 may automatically control the means for feeding 7 to transfer the respective electrolysis modules 2 to the target state B (according to sequence S1), or the means for draining 9 the electrolysis cells 4 of the respective electrolysis module 2 to transfer the respective electrolysis modules 2 to the target state A (according to sequence S10).

The plant control unit 3 may preferably be further configured to take a third decision which electrolysis modules 2 are to be transferred from the intermediate state B to the production state C or from the production state C to the intermediate state B. This third decision may be based on a present supply of electric energy 14 (cf. Fig. 4) to the electrolysis plant 1. The plant control unit 1 may automatically perform a predefined sequence of controls S5, S6 to transfer the respective electrolysis modules 2 to the respective state C, B.

As depicted in Fig. 3 the intermediate state B may be subdivided into at least four distinct stages B1, B2, B3, B4. The stages B1, B2, B3, B4 are defined by progressively accumulating the following features:
stage B1: electrolysis cells 4 are filled with liquid electrolyte 8,
stage B2: in addition, the liquid electrolyte 8 being circulated in the liquid electrolyte circuit 5 through the electrolysis cells 4,
stage B3: in addition, a polarization voltage V1 being applied to the electrolysis cells 4 and
stage B4: in addition, a production voltage V2 being applied to the electrolysis cells 4 while venting valves 15, 16 being open;

The production voltage V2 is a voltage that exceeds the voltage threshold for the electrolysis reaction to take place. The polarization voltage V1 a voltage smaller than production voltage, at which only insignificant amounts of electrolysis products may be produced.

The plant control unit 3 is configured to take a second decision for each electrolysis module 2 in the intermediate state B, which one of the stages B1, B2, B3, B4 is to be adopted as a function of the time scale T of an expected change in the future supply of electric energy 13. Each of the stages B1 to B3, or B1 to B4 may be subject to an individual time constraint for the plant control unit 3 defining a threshold period of time after which the respective stage has to be left again.

According to the exemplary embodiment as depicted in Fig. 3, the difference states A, B, C and stages B1 to B4 are connected by defined control sequences S1 to S10 . During start-up of an electrolysis module the sequences S1 to S5 are carried out in order to bring the electrolysis module 2 from reserve state A to production state C. Sequences S6 to S10 are carried out in order to bring the electrolysis module 2 from production state C to reserve state A.

The sequences S1 to S10 are characterized as follows:
Sequences S1 and S10 are characterized by filling/draining the electrolysis cells 4 for the module 2 with/from liquid electrolyte 8, respectively. In addition, the sequences may comprise switching on/off a nitrogen purge stream through the cells 4 to the open venting valves 15, 16.

Sequences S2 and S9 are characterized in that circulation of the liquid electrolyte 8 in the liquid electrolyte circuit 5 is switched on/off, respectively. In addition, the sequences may comprise switching on/off a nitrogen purge stream through the cells 4 to the open venting valves 15, 16.

Sequences S3 and S8 are characterized in that the polarization voltage is turned on/off, respectively. In addition, the sequences may comprise warming up / cooling down the electrolyte to/from an operating temperature > 70 °C. Further if not done in the previously described sequences, the nitrogen purge stream through the cells 4 to the open venting valves 15, 16 is switched on/off in these sequences.

Sequences S4 and S7 are characterized in that the production voltage is turned on/off, respectively. However, the electrolysis modules are operated at a low load smaller than 20 % of their nominal load. In addition, the sequences S4 and S7 may comprise switching off/on a nitrogen purge stream through the cells 4. By producing a limited amount of electrolysis products in stage S4, the nitrogen is flushed from the cells and the electrolysis cells 4 may become pressurized to an operating pressure level of e.g. several hundred millibars. However, the venting valves 15, 16 remain open.

Sequences S5 and S6 are characterized in that circulation of the venting valves 15, 16 are closed/opened, so that electrolysis products 10, 11 are exported to battery limits 12, or vented respectively. In addition, the sequences may comprise increasing/lowering the load level of the electrolysis module, respectively.

All of the above-described predefined control sequences S1 to S10 carried out by the control unit 3 are preferably secured by automated trip conditions and interlocks implemented in the control unit 3 to safeguard the automated state transfers by providing safe fallback states.

**Fig. 4** shall explain further advantages of the control method. Fig. 4 shows a diagram of the present supply of electric energy 14 to an electrolysis plant and a forecast of its future supply of electric energy 13. From the forecasted data it can be concluded that within the time scale T a significant increase of the available supply of electric energy is expected. Based on this forecast the control unit 3 decides to transfer now (i.e. at time 0 in the Fig. 4) additional modules from the reserve state A to the intermediate state B. This will enable the electrolysis plant 1 to put these modules further into production state C at the time T, when the increase in energy supply actually occurs. Thus, the plant 1 can directly make use of the increased energy supply at time T, despite the fact that it takes time to transfer modules from state A to state C via the intermediate state B and taking into account at the same time, that having electrolysis modules 2 in the intermediate state B for an indefinite amount of time is likely to reduce their service life and/or shorten their maintenance periods.

Within the time period between 0 and T the control unit may decide to subsequently adopt different stages B1 to B4 in order to prepare for the transfer to production state C at time T as the time scale of this expected change in energy supply decreases.

As the forecast may change during this time, it may happen that either additional modules are needed to be transferred to from the reserve state A to the intermediate state B or that modules from the intermediate state B are returned to the reserve state A without having been in production state C, at all. The modules in the intermediate state B thus form a flexible, time-limited but directly available reserve of production capacity, which is managed based on the forecast of available energy supply to the electrolysis plant.

### List of Reference Signs

- 1: electrolysis plant
- 2: electrolysis module
- 3: plant control unit
- 4: electrolysis cells
- 5: liquid electrolyte circuit
- 6: electrolyte tank
- 7: means for feeding the electrolysis cells
- 8: liquid electrolyte
- 9: means for draining the electrolysis cells
- 10, 11: electrolysis products
- 12: battery limits
- 13: future supply of electric energy
- 14: present supply of electric energy
- 15, 16: venting valves
- 17: artificial intelligence system
- 18: means for applying an electric voltage
- 19: input channel
- 20: central processing module
- 21: load setpoint module
- 22: timer
- 23: predictive maintenance module
- 24: plant balancing module
- 25: control line
- 26: gas liquid separator
- 30: wind farm
- 40: solar power plant
- 50: water power plant

- A: reserve state
- B: intermediate state
- B1 to B4: stage 1 to 4 of intermediate state
- C: production state
- S1 to S10: control sequences
- T: time scale
- V: electric voltage

## Claims

1. Method of operating an electrolysis plant, the electrolysis plant (1) comprising
a plurality of electrolysis modules (2) and
a plant control unit (3) to control individual operating states of the electrolysis modules (2),
wherein each electrolysis module (2) comprises
a plurality of electrolysis cells (4) that are connected electrically in series and arranged in parallel in a liquid electrolyte circuit (5) comprising an electrolyte tank (6),
means for feeding (7) the electrolysis cells (4) with liquid electrolyte (8) from the electrolyte tank (6),
means for draining (9) the liquid electrolyte (8) from the electrolysis cells (4) to the electrolyte tank (6), and
means for applying (18) an electric voltage (V) to the electrolysis cells (4) connected in series,
**characterized in that** the individual operating state of each electrolysis module (2) is
chosen from a defined set of permissible operating states, which set comprises at least
a production state (C), in which the electrolysis cells (4) of the respective electrolysis module (2) are filled with a liquid electrolyte (8) and electrolysis products (10, 11) are exported to battery limits (12),
an intermediate state (B), in which the electrolysis cells (4) of the respective electrolysis module (2) are filled with the liquid electrolyte (8) without electrolysis products (10, 11) being exported to battery limits (12), and
a reserve state (A), in which the electrolysis cells (4) of the respective electrolysis module (2) are drained from liquid electrolyte (8),
wherein the plant control unit (3) based on a forecast of a future supply of electric energy (13) to the electrolysis plant (1) takes a first decision which electrolysis modules (2) are to be transferred from the reserve state (A) to the intermediate state (B) or from the intermediate state (B) to the reserve state (A), and automatically controls the means for feeding (7) and/or the means for draining (9) the electrolysis cells (4) of the respective electrolysis modules (2) to transfer the respective electrolysis modules (2) to the respective target state (B, A).

2. Method according to claim 1, **characterized in that** the intermediate state (B) is subdivided into at least four distinct stages (B1, B2, B3, B4) that are defined by progressively accumulating the following features:
stage 1 (B1): electrolysis cells (4) being filled with liquid electrolyte (8),
stage 2 (B2): in addition, the liquid electrolyte (8) being circulated in the liquid electrolyte circuit (5) through the electrolysis cells (4),
stage 3 (B3): in addition, a polarization voltage being applied to the electrolysis cells (4), and
stage 4 (B4): in addition, a production voltage being applied to the electrolysis cells (4) while venting valves (15, 16) being open,
wherein the plant control unit (3) takes a second decision for each electrolysis module (2) in the intermediate state (B), which one of the stages (B1, B2, B3, B4) is to be adopted as a function of the time scale (T) of an expected change in the future supply of electric energy (13).

3. Method according to claim 1 or 2, **characterized in that** the plant control unit (3) based on a present supply of electric energy (14) to the electrolysis plant (1) takes a third decision which electrolysis modules (2) are to be transferred from the intermediate state (B) to the production state (C) or from the production state (C) to the intermediate state (B), and automatically performs a predefined sequence of controls to transfer the respective electrolysis modules (2) to the respective state (C, B).

4. Method according to any one of the claims 1 to 3, **characterized in that** the electrolysis plant (1) is supplied with renewable energy from a wind farm (30) and/or solar power plant (40) and/or water power plant (50) and that the control unit (3) forecasts the future supply of electric energy (13) to the electrolysis plant (1) using an artificial intelligence system (17) that has been trained based on historical weather data, including wind speeds and/or solar irradiation and/or amounts of precipitation, for the sites of the wind farm or solar power plant or water power plant, respectively.

5. Method according to claim 4, **characterized in that** the artificial intelligence system (17) is continuously trained by present weather data and data on present supply of electric energy (14) collected during operation of the electrolysis plant (1).

6. Method according to any one of the claims 3 to 5, **characterized in that** the first, second and/or third decision is taken under the constraint that electrolysis modules (2) having been in the intermediate state (B) for a predetermined threshold period of time are to be transferred either to the production (C) state or the reserve state (A).

7. Method according to any one of the claims 1 to 6, **characterized in that** the plant control unit (3) chooses for each electrolysis module (2) in the production state (C) a load set point between 5 % and 110 % of a nominal production capacity of the electrolysis module (2) and controls the means for applying (18) an electric voltage (V) such that the load set point is approached.

8. Method according to any one of the claims 1 to 7, **characterized in that** control sequences for automated state transfers carried out by the control unit (3) are secured by automated trip conditions and interlocks implemented in the control unit (3) to safeguard the automated state transfers by providing safe fallback states.

9. Electrolysis plant comprising
a plurality of electrolysis modules (2) and
a plant control unit (3) to control the individual operating states of the electrolysis modules (2),
wherein each electrolysis module (2) comprises
a plurality of electrolysis cells (4) that are connected electrically in series and arranged in parallel in a liquid electrolyte circuit (5) comprising an electrolyte tank (6),
means for feeding (7) the electrolysis cells (4) with liquid electrolyte (8) from the electrolyte tank (6),
means for draining (9) the liquid electrolyte (8) from the electrolysis cells (4) to the electrolyte tank (6), and
means for applying (18) an electric voltage (V) to the electrolysis cells (4) connected in series,
**characterized in that** the individual operating state of each electrolysis module (2) is
chosen from a set of permissible operating states, which set comprises at least a production state (C), in which the electrolysis cells (4) of the respective electrolysis module (2) are filled with a liquid electrolyte (8) and electrolysis products (10, 11) are exported to battery limits (12),
an intermediate state (B), in which the electrolysis cells (4) of the respective electrolysis module (2) are filled with the liquid electrolyte (8) without electrolysis products (10, 11) being exported to battery limits (12), and
a reserve state (A), in which the electrolysis cells (4) of the respective electrolysis module (2) are drained from liquid electrolyte (8),
wherein the plant control unit (3) is configured to take a first decision which electrolysis modules are to be transferred from the reserve state (A) to the intermediate state (B) or from the intermediate state (B) to the reserve state (A) based on a forecast of a future supply of electric energy (13) to the electrolysis plant (1), and to automatically control the means for feeding (7) and/or the means for draining (9) the electrolysis cells (4) of the respective electrolysis module (2) to transfer the respective electrolysis modules (2) to the respective target state (B, A).

10. Electrolysis plant according to claim 9, **characterized in that** the plant control unit (3) is configured to take a third decision which electrolysis modules (2) are to be transferred from the intermediate state (B) to the production state (C) or from the production state (C) to the intermediate state (B) based on a present supply of electric energy (14) to the electrolysis plant (1), and to automatically perform a predefined sequence of controls to transfer the respective electrolysis modules (2) to the respective state (C, B).

11. Electrolysis plant according to claim 9 or 10, **characterized in that** the plant control unit (3) for forecasting the future supply of electric energy (13) comprises an artificial intelligence system (17).

12. Electrolysis plant according to claim 11, **characterized in that** the control unit (3) comprises an input channel (19) for present weather data collected during operation of the electrolysis plant (1) and is configured to train the artificial intelligence system (17) continuously based on the present weather data and data on the present supply of electric energy (14).

13. Electrolysis plant according to any one of the claims 10 to 12, **characterized in that** the control unit (3) comprises a timer (22) to measure the period of time of each electrolysis module (2) being in the intermediate state (B), wherein the control unit (3) is configured to take the first and/or the second decision under the constraint that electrolysis modules having been in the intermediate state (B) for a predetermined threshold period of time are to be transferred either to the production state (C) or the reserve state (A).

14. Electrolysis plant according to any one of the claims 9 to 13, **characterized in that** the plant control unit (3) is configured to choose for each electrolysis module (2) in the production state (C) a load set point between 5 % and 110 % of a nominal production capacity of the electrolysis module (2) and to control the means for applying (18) an electric voltage (V) such that the load set point is approached.

## Amended claims

### Amended claims in accordance with Rule 137(2) EPC.

1. Method of operating an electrolysis plant, the electrolysis plant (1) comprising a plurality of electrolysis modules (2) and
a plant control unit (3) to control individual operating states of the electrolysis modules (2),
wherein each electrolysis module (2) comprises
a plurality of electrolysis cells (4) that are connected electrically in series and arranged in parallel in a liquid electrolyte circuit (5) comprising an electrolyte tank (6),
means for feeding (7) the electrolysis cells (4) with liquid electrolyte (8) from the electrolyte tank (6),
means for draining (9) the liquid electrolyte (8) from the electrolysis cells (4) to the electrolyte tank (6), and
means for applying (18) an electric voltage (V) to the electrolysis cells (4) connected in series,
wherein the individual operating state of each electrolysis module (2) is chosen from a defined set of permissible operating states, which set comprises at least
a production state (C), in which the electrolysis cells (4) of the respective electrolysis module (2) are filled with a liquid electrolyte (8) and electrolysis products (10, 11) are exported to battery limits (12),
an intermediate state (B), in which the electrolysis cells (4) of the respective electrolysis module (2) are filled with the liquid electrolyte (8) without electrolysis products (10, 11) being exported to battery limits (12), and
a reserve state (A), in which the electrolysis cells (4) of the respective electrolysis module (2) are drained from liquid electrolyte (8),
**characterized in that** the plant control unit (3) based on a forecast of a future supply of electric energy (13) to the electrolysis plant (1) takes a first decision which electrolysis modules (2) are to be transferred from the reserve state (A) to the intermediate state (B) or from the intermediate state (B) to the reserve state (A), and automatically controls the means for feeding (7) and/or the means for draining (9) the electrolysis cells (4) of the respective electrolysis modules (2) to transfer the respective electrolysis modules (2) to the respective target state (B, A).

2. Method according to claim 1, **characterized in that** the intermediate state (B) is subdivided into at least four distinct stages (B1, B2, B3, B4) that are defined by progressively accumulating the following features:
stage 1 (B1): electrolysis cells (4) being filled with liquid electrolyte (8),
stage 2 (B2): in addition, the liquid electrolyte (8) being circulated in the liquid electrolyte circuit (5) through the electrolysis cells (4),
stage 3 (B3): in addition, a polarization voltage being applied to the electrolysis cells (4), and
stage 4 (B4): in addition, a production voltage being applied to the electrolysis cells (4) while venting valves (15, 16) being open,
wherein the plant control unit (3) takes a second decision for each electrolysis module (2) in the intermediate state (B), which one of the stages (B1, B2, B3, B4) is to be adopted as a function of the time scale (T) of an expected change in the future supply of electric energy (13).

3. Method according to claim 1 or 2, **characterized in that** the plant control unit (3) based on a present supply of electric energy (14) to the electrolysis plant (1) takes a third decision which electrolysis modules (2) are to be transferred from the intermediate state (B) to the production state (C) or from the production state (C) to the intermediate state (B), and automatically performs a predefined sequence of controls to transfer the respective electrolysis modules (2) to the respective state (C, B).

4. Method according to any one of the claims 1 to 3, **characterized in that** the electrolysis plant (1) is supplied with renewable energy from a wind farm (30) and/or solar power plant (40) and/or water power plant (50) and that the control unit (3) forecasts the future supply of electric energy (13) to the electrolysis plant (1) using an artificial intelligence system (17) that has been trained based on historical weather data, including wind speeds and/or solar irradiation and/or amounts of precipitation, for the sites of the wind farm or solar power plant or water power plant, respectively.

5. Method according to claim 4, **characterized in that** the artificial intelligence system (17) is continuously trained by present weather data and data on present supply of electric energy (14) collected during operation of the electrolysis plant (1).

6. Method according to any one of the claims 3 to 5, **characterized in that** the first, second and/or third decision is taken under the constraint that electrolysis modules (2) having been in the intermediate state (B) for a predetermined threshold period of time are to be transferred either to the production (C) state or the reserve state (A).

7. Method according to any one of the claims 1 to 6, **characterized in that** the plant control unit (3) chooses for each electrolysis module (2) in the production state (C) a load set point between 5 % and 110 % of a nominal production capacity of the electrolysis module (2) and controls the means for applying (18) an electric voltage (V) such that the load set point is approached.

8. Method according to any one of the claims 1 to 7, **characterized in that** control sequences for automated state transfers carried out by the control unit (3) are secured by automated trip conditions and interlocks implemented in the control unit (3) to safeguard the automated state transfers by providing safe fallback states.

9. Electrolysis plant comprising
a plurality of electrolysis modules (2) and
a plant control unit (3) to control the individual operating states of the electrolysis modules (2),
wherein each electrolysis module (2) comprises
a plurality of electrolysis cells (4) that are connected electrically in series and arranged in parallel in a liquid electrolyte circuit (5) comprising an electrolyte tank (6),
means for feeding (7) the electrolysis cells (4) with liquid electrolyte (8) from the electrolyte tank (6),
means for draining (9) the liquid electrolyte (8) from the electrolysis cells (4) to the electrolyte tank (6), and
means for applying (18) an electric voltage (V) to the electrolysis cells (4) connected in series,
wherein the individual operating state of each electrolysis module (2) is chosen from a set of permissible operating states, which set comprises at least
a production state (C), in which the electrolysis cells (4) of the respective electrolysis module (2) are filled with a liquid electrolyte (8) and electrolysis products (10, 11) are exported to battery limits (12),
an intermediate state (B), in which the electrolysis cells (4) of the respective electrolysis module (2) are filled with the liquid electrolyte (8) without electrolysis products (10, 11) being exported to battery limits (12), and
a reserve state (A), in which the electrolysis cells (4) of the respective electrolysis module (2) are drained from liquid electrolyte (8),
**characterized in that** the plant control unit (3) is configured to take a first decision which electrolysis modules are to be transferred from the reserve state (A) to the intermediate state (B) or from the intermediate state (B) to the reserve state (A) based on a forecast of a future supply of electric energy (13) to the electrolysis plant (1), and to automatically control the means for feeding (7) and/or the means for draining (9) the electrolysis cells (4) of the respective electrolysis module (2) to transfer the respective electrolysis modules (2) to the respective target state (B, A).

10. Electrolysis plant according to claim 9, **characterized in that** the plant control unit (3) is configured to take a third decision which electrolysis modules (2) are to be transferred from the intermediate state (B) to the production state (C) or from the production state (C) to the intermediate state (B) based on a present supply of electric energy (14) to the electrolysis plant (1), and to automatically perform a predefined sequence of controls to transfer the respective electrolysis modules (2) to the respective state (C, B).

11. Electrolysis plant according to claim 9 or 10, **characterized in that** the plant control unit (3) for forecasting the future supply of electric energy (13) comprises an artificial intelligence system (17).

12. Electrolysis plant according to claim 11, **characterized in that** the control unit (3) comprises an input channel (19) for present weather data collected during operation of the electrolysis plant (1) and is configured to train the artificial intelligence system (17) continuously based on the present weather data and data on the present supply of electric energy (14).

13. Electrolysis plant according to any one of the claims 10 to 12, **characterized in that** the control unit (3) comprises a timer (22) to measure the period of time of each electrolysis module (2) being in the intermediate state (B), wherein the control unit (3) is configured to take the first and/or the second decision under the constraint that electrolysis modules having been in the intermediate state (B) for a predetermined threshold period of time are to be transferred either to the production state (C) or the reserve state (A).

14. Electrolysis plant according to any one of the claims 9 to 13, **characterized in that** the plant control unit (3) is configured to choose for each electrolysis module (2) in the production state (C) a load set point between 5 % and 110 % of a nominal production capacity of the electrolysis module (2) and to control the means for applying (18) an electric voltage (V) such that the load set point is approached.
